# EUROPEAN PATENT SPECIFICATION

(11) **EP 3 131 239 B1**
(45) Date of publication and mention of the grant of the patent: **01.04.2020**
(21) Application number: 14889451.2
(22) Date of filing: 17.04.2014
(51) Int. Cl.: H04L 12/701, H04L 12/781, H04L 12/715

(54) **METHOD AND APPARATUS FOR PATH ESTABLISHMENT**
VERFAHREN UND VORRICHTUNG ZUR WEGHERSTELLUNG
PROCÉDÉ ET APPAREIL POUR UN ÉTABLISSEMENT DE CHEMIN

(43) Date of publication of application: 15.02.2017
(73) Proprietor: Huawei Technologies Co., Ltd., Longgang District Shenzhen, Guangdong 518129 (CN)
(72) Inventor: LI, Gang, Shenzhen Guangdong 518129 (CN)
(74) Representative: Pfenning, Meinig & Partner mbB
(86) International application number: PCT/CN2014/075640
(87) International publication number: WO 2015/157979

(56) References cited:
- WO-A1-2013/082983
- WO-A1-2013/184941
- CN-A- 103 688 497
- CN-A- 103 688 510
- CN-A- 103 688 510
- JP-A- 2013 038 767
- Siamak Azodolmolky ET AL: "Integrated OpenFlow-GMPLS control plane: an overlay model for software defined packet over optical networks References and links", ACM SIGCOMM Comput. Commun. Rev.Optical Society of America, 1 January 2008 (2008-01-01), pages 69-74, XP055281749, Retrieved from the Internet: URL:https://www.osapublishing.org/DirectPD FAccess/40E8115C-E33C-3AD7-B9312E70C6B4CEE F_224728/oe-19-26-B421.pdf?da=1&id=224728& seq=0&mobile=no
- LEI LIU ET AL: "Demonstration of a dynamic transparent WSON employing flexible transmitter/receiver controlled by an OpenFlow/stateless PCE integrated control plane", OPTICAL FIBER COMMUNICATION CONFERENCE AND EXPOSITION AND THE NATIONAL FIBER OPTIC ENGINEERS CONFERENCE (OFC/NFOEC), 2013, IEEE, 17 March 2013 (2013-03-17), pages 1-3, XP032678805, DOI: 10.1364/NFOEC.2013.NTU3F.5 ISBN: 978-1-4799-0457-0 [retrieved on 2013-06-14]

## Description

### TECHNICAL FIELD

The present invention relates to the field of communications technologies, and in particular, to a trail establishment method and apparatus.

### BACKGROUND

At present, as a bandwidth requirement is caused by the growth of IP services, unexpectedness and uncertainty of IP services require a network to dynamically allocate a bandwidth, but an existing static optical network already hardly meets the requirement.

In order to implement the requirement of dynamic bandwidth allocation, a GMPLS (Generalized Multiprotocol Label Switching, generalized multiprotocol label switching) network and an SDN (Software Defined Network, software-defined network) emerge as the times require. The GMPLS network supports multiple protocols, and can implement automatic and dynamic network management; the SDN mainly includes system components, such as a northbound interface connected to an upper-layer application, an SDN controller, a switch supporting the SDN controller, and a southbound interface located between the SDN controller and the switch. Control over the switch may be implemented by using the SDN controller in the SDN. An implementation protocol of the southbound interface is the OPENFLOW Protocol; because the SDN controller is connected to the switch by using the southbound interface, the SDN controller can directly control trail establishment of a device node by using the OPENFLOW Protocol.

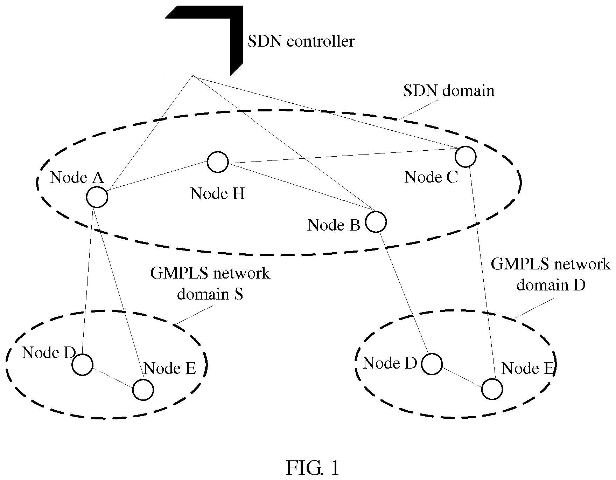

Based on problems of costs and complexity of network deployment, at present, as shown in FIG. 1, an entire network is generally deployed in a networking form in which the SDN and the GMPLS network coexist. Further, because a protocol format supported by the SDN is different from a protocol format supported by the GMPLS network, a trail cannot be established between a node in the SDN and a node in the GMPLS network.

In conclusion, at present, in a network in which both an SDN and a GMPLS network are deployed, there is a problem that a trail cannot be established between an internal node of the SDN and a node in the GMPLS network.

CN 103688510A provides a method and a device for inter-network communication. The method comprises: a signaling path is built through a transmitted signaling protocol message to build a service path in which a second network is communicated with a third network across a first network, and service data achieves an end-to-end transmission process from the second network, across the first network and to the third network.

WO 2013/184941A discloses a method of transferring data between a software defined network (SDN) and an information-centric network (ICN), wherein the method comprises receiving a request from an SDN node for a specific named content stored on an ICN, wherein the request is encapsulated in an Internet Protocol (IP) packet, decapsulating the IP packet using an IP protocol stack, parsing the request to obtain the name of the specific named content, finding a path to an ICN networking device hosting the specific named content using the name, and forwarding the packet to the ICN networking device over the path.

### SUMMARY

Embodiments of the present invention provide a trail establishment method and apparatus, which are used to solve a problem in the prior art that, in a network in which both an SDN and a GMPLS network are deployed, a trail cannot be established between a node in the SDN and a node in the GMPLS network.

The present invention is defined in the independent claims. The dependent claims define particular embodiments of the invention.

In the embodiments of the present invention, a trail inquiry message is sent to a dual stack node in a first network; a trail feedback message generated by the dual stack node based on the trail inquiry message is received; a virtual topology is formed, according to the trail feedback message, by using a network topology of the first network and a route from the dual stack node to a sink end node; and a route from a source end node to the sink end node is acquired according to the virtual topology, and a trail from the source end node to the sink end node is established. By using the technical solutions of the present invention, a virtual topology is constructed according to a network topology of a first network and a route, which is fed back by the dual stack node, from a dual stack node to a sink end node, thereby implementing establishment of a trail between a source end node and the sink end node that are located in different networks, and further implementing establishment of a trail between nodes in different networks.

### BRIEF DESCRIPTION OF DRAWINGS

FIG. 1 is a schematic diagram of a network architecture in which both an SDN and a GMPLS network are deployed in the prior art;
FIG. 2 is a schematic diagram of a network architecture in which both an SDN and a GMPLS network are deployed according to an embodiment of the present invention;
FIG. 3 is a flowchart 1 of trail establishment according to an embodiment of the present invention;
FIG. 4 is a schematic structural diagram of a virtual topology according to an embodiment of the present invention;
FIG. 5 is a flowchart 2 of trail establishment according to an embodiment of the present invention;
FIG. 6 is an object format bearing identification information of a sink end node according to an embodiment of the present invention;
FIG. 7 is a packet format carrying identification information of a node according to an embodiment of the present invention;
FIG. 8 is a schematic structural diagram 1 of a trail establishment apparatus according to an embodiment of the present invention;
FIG. 9 is a schematic structural diagram 2 of a trail establishment apparatus according to an embodiment of the present invention;
FIG. 10 is a schematic structural diagram 1 of a controller according to an embodiment of the present invention; and
FIG. 11 is a schematic structural diagram 2 of a controller according to an embodiment of the present invention.

### DESCRIPTION OF EMBODIMENTS

The present invention is intended to solve a problem in the prior art that a trail cannot be established between a node in a first network and a node in a second network when two heterogeneous networks or two networks in different management domains are deployed simultaneously. In the embodiments of the present invention, a trail inquiry message is sent to a dual stack node in the first network; a trail feedback message generated by the dual stack node based on the trail inquiry message is received; a virtual topology is formed, according to the trail feedback message, by using a network topology of the first network and a route from the dual stack node to a sink end node; and a route from a source end node to the sink end node is acquired according to the virtual topology, and a trail from the source end node to the sink end node is established. By using the technical solutions of the present invention, a virtual topology is constructed according to a network topology of a first network and a route, which is fed back by the dual stack node, from a dual stack node to a sink end node, thereby implementing establishment of a trail between a source end node and the sink end node that are located in different networks, and further implementing establishment of a trail between nodes in different networks.

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

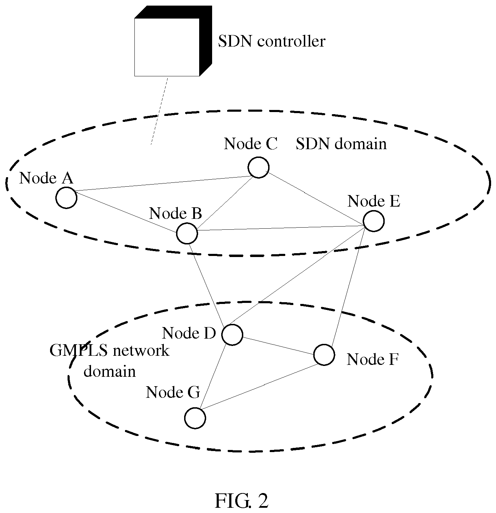

In the embodiments of the present invention, both a first network and a second network are deployed, where the first network and the second network may be respectively an SDN and a GMPLS network, or a GMPLS network and an MPLS network, or a GMPLS network and the Ethernet, or the like. The following uses an example that the first network is the SDN and the second network is the GMPLS network for description. Referring to FIG. 2, in the foregoing network architecture, the SDN includes: an SDN controller, a node A, a node B, a node C and a node E, where the node B and the node E are boundary nodes in the SDN; and the GMPLS network includes: a node D, a node G, and a node F.

The following further describes the embodiments of the present invention in detail with reference to the accompanying drawings in the specification.

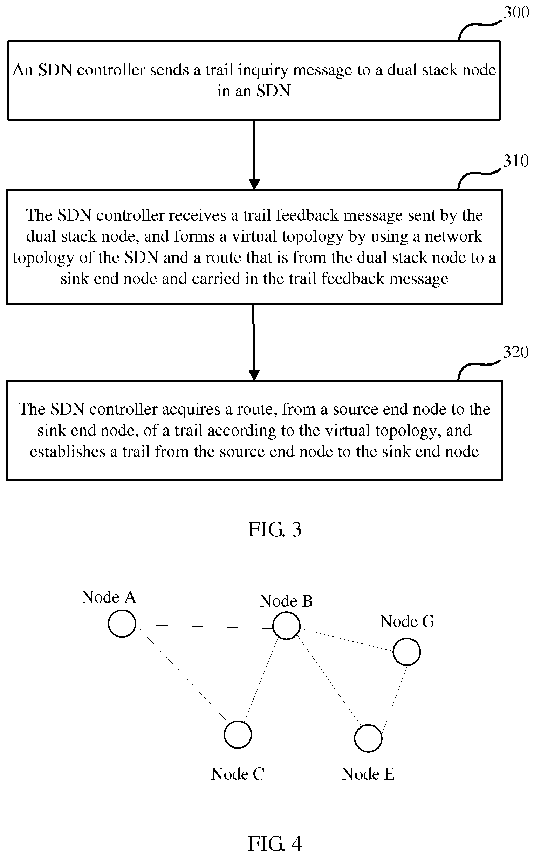

Referring to FIG. 3, in an embodiment of the present invention, when a source end node is located in an SDN, and a sink end node is located in a GMPLS network, a process of establishing a trail between nodes in the SDN and the GMPLS network is as follows:
Step 300: An SDN controller sends a trail inquiry message to a dual stack node in an SDN.

In this embodiment of the present invention, the dual stack node is a node that supports both an SDN protocol (for example, the OPENFLOW protocol) and an GMPLS network protocol (for example, the RSVP-TE protocol). For example, referring to FIG. 2, the node B and the node E are dual stack nodes. A device that sends the trail inquiry message to the dual stack node in the SDN may be the SDN controller, or may be another third-party device that does not belong to the SDN and the GMPLS network. The following uses an example that the SDN controller sends the trail inquiry message to the dual stack protocol node in the SDN for detailed description.

Optionally, before the SDN controller sends the trail inquiry message to the dual stack node, the SDN controller may instruct each node in the SDN to report identification information of each node to the SDN controller; or before the SDN controller sends the trail inquiry message to the dual stack node, the SDN controller may acquire identification information of each node in the SDN, where the identification information is locally stored and pre-configured. Information reported by each node may further include attribute information of the node, for example, the node is a dual stack node or the node is a boundary node.

The SDN controller, according to a sink end node identifier of a trail that needs to be established and an identifier of each node in the SDN, sends the trail inquiry message to the dual stack node if the SDN controller determines that the sink end node of the trail is not in the SDN, so as to enable the dual stack node to calculate a route from the dual stack node to the sink end node according to the trail inquiry message. The trail inquiry message carries identification information of the sink end node of the trail, and may also carry identification information of the dual stack node and trail attribute information, and the like. The trail attribute information may include: a service bandwidth parameter, a service routing constraint condition, an information transmission delay, and the like.

The trail inquiry message may be an OPENFLOW protocol message. For example, a new message type OPFT_PATH_INQUIRE_REQUEST extended from the OPENFLOW protocol is used as the trail inquiry message.

Step 310: The SDN controller receives a trail feedback message sent by the dual stack node, and forms a virtual topology by using a network topology of the SDN and a route, which is carried in the trail feedback message, from the dual stack node to a sink end node.

In this embodiment of the present invention, after receiving the trail inquiry message sent by the SDN controller, the dual stack node determines the sink end node of the trail according to the identification information of the sink end node in the trail inquiry message, acquires the route from the dual stack node to the sink end node, and sends, to the SDN controller, the route from the dual stack node to the sink end node, where the route is carried in the trail feedback message. Optionally, all routes from the dual stack node to the sink end node that are acquired by the dual stack node meet parameter constraints included in the trail attribute information carried in the trail inquiry message. In addition, the route from the dual stack node to the sink end node that is sent by the dual stack node (for example, the node B or the node E) to the SDN controller may be a loose route, for example, a route B-G in FIG. 2, or may be a strict route, for example, a route B-D-G in FIG. 2. The trail feedback message may further carry the trail attribute information, for example, a delay overhead of each hop node.

The trail feedback message sent by the dual stack node to the SDN controller may be an OPENFLOW protocol message, for example, a new message type OPFT_PATH_INQUIRE_REPLY extended from the OPENFLOW protocol is used as the trail feedback message.

The SDN controller constructs the virtual topology, shown in FIG. 4, based on a locally stored network topology of the SDN and the route, which is carried in the trail feedback message sent by the dual stack node, from the dual stack node to the sink end node.

Step 320: The SDN controller acquires a route, from a source end node to the sink end node, of the trail according to the virtual topology, and establishes a trail from the source end node to the sink end node.

In this embodiment of the present invention, the SDN controller acquires an optimal route (for example, an optimal trail is A-C-E-G) from the source end node to the sink end node according to the virtual topology. The SDN controller sends the optimal route to the dual stack node. The optimal route may be a route with a smallest information transmission delay, or may be a route with a shortest information transmission trail.

Optionally, when the SDN controller establishes the trail from the source end node to the sink end node after locally constructing the virtual topology, a dual stack node that the trail passes through needs to be first determined according to the acquired route from the source end node to the sink end node. For example, in this embodiment of the present invention, the route from the source end node to the sink end node is A-C-E-G, so that the dual stack node that the trail passes through is the node E. Then, the SDN controller establishes a trail from the source end node to the dual stack node that the trail passes through. For example, in this embodiment of the present invention, the source end node is the node A, and the route from the source end node to the sink end node is A-C-E-G, so that the SDN controller establishes a trail from the node A to the node E. The SDN controller sends a trail establishment application message to the dual stack node that the trail passes through, so as to establish, to the sink end node, a trail from the dual stack node that the trail passes through. After the trail from the source end node to the dual stack node and the trail from the dual stack node to the sink end node are established completely, establishment of the trail from the source end node to the sink end node node is implemented, where the trail establishment application message carries the route, to the sink end node, from the dual stack node that the trail passes through. Optionally, the trail establishment application message further carries the trail attribute information.

Optionally, the SDN controller sends the trail establishment application message to the dual stack node that the trail passes through, so that the dual stack node establishes the trail from the node to the sink end node in the GMPLS network, which is specifically: the dual stack node acquires an optimal route from the dual stack node to the sink end node according to the route, which is carried in the trail establishment application message, from the dual stack node to the sink end node, and establishes the trail from the dual stack node to the sink end node based on the optimal route. The trail establishment application message may further carry the trail attribute information. For example, for the dual stack node E, after receiving the trail establishment application message sent by and included in the SDN controller, the node E acquires all routes (for example, E-D-G and E-F-G) from the node E to the sink end node G, and selects an optimal route (for example, E-F-G) from all the routes.

Optionally, the dual stack node may locally acquire stored identification information of each node in the GMPLS network. The dual stack node may establish the trail from the dual stack node to the sink end node by using RSVP-TE signaling.

By using the foregoing technical solution, an SDN controller constructs a virtual topology from a source end node to a sink end node, thereby implementing establishment of an optimal trail from the source end node to the sink end node, and further implementing establishment of a trail between a node in an SDN and a node in a GMPLS network.

In another embodiment of the present invention, when an SDN controller determines, according to an identifier of a sink end node of a trail that needs to be established and an identifier of each node in an SDN, that the sink end node is not a node in the SDN, the SDN controller calculates a route from a source end node of the trail to each dual stack node. Optionally, the SDN controller may select, according to trail attribute information, an optimal route from all the foregoing routes obtained by calculation, and establish a trail from the source end node to a dual stack node that an optimal trail passes through.

The SDN controller sends, according to the optimal route obtained by calculation, a trail establishment application message to the dual stack node that the optimal route passes through, so as to enable the dual stack node that the optimal trail passes through to establish, according to identification information of the sink end node that is carried in the trail establishment application message, a trail from the dual stack node to the sink end node corresponding to the identification information of the sink end node. The trail from the dual stack node to the sink end node corresponding to the identification information of the sink end node meets related parameters that are specified in the trail attribute information. The dual stack node drives establishment of the trail from the dual stack node to the sink end node by using RSVP-TE signaling.

By using the foregoing technical solution, a dual stack node does not need to send a trail feedback message to an SDN controller, and the SDN controller does not need to construct a virtual topology, which can implement rapid establishment of a trail from a source end node to a sink end node.

In another embodiment of the present invention, when an SDN controller supports both an SDN protocol and a GMPLS protocol, that is, when the SDN controller provides functions of both the SDN controller and the dual stack node in the foregoing embodiments, after receiving a trail establishment indication, the SDN controller acquires a route from a source end node to a sink end node according to a GMPLS network topology and an SDN topology, drives to construct a trail in an SDN, and generates RSVP-TE signaling and sends the RSVP-TE signaling to a node (for example, a node F) that the trail from the source end node to the sink end node passes through in a GMPLS network. Because the SDN controller and the node F separately belong to different networks, optionally, the RSVP-TE signaling is signaling that includes an OPENFLOW message header, the RSVP-TE signaling is sent to a boundary node (for example, a node E) that the trail passes through in the SDN, and after removing the OPENFLOW message header, the boundary node that the trail passes through in the SDN forwards the RSVP-TE signaling to the node that the trail passes through in the GMPLS network. In addition, after completing trail establishment in the GMPLS network, the node that the trail passes through in the GMPLS network generates a trail establishment completion feedback message and sends the trail establishment completion feedback message to the SDN controller.

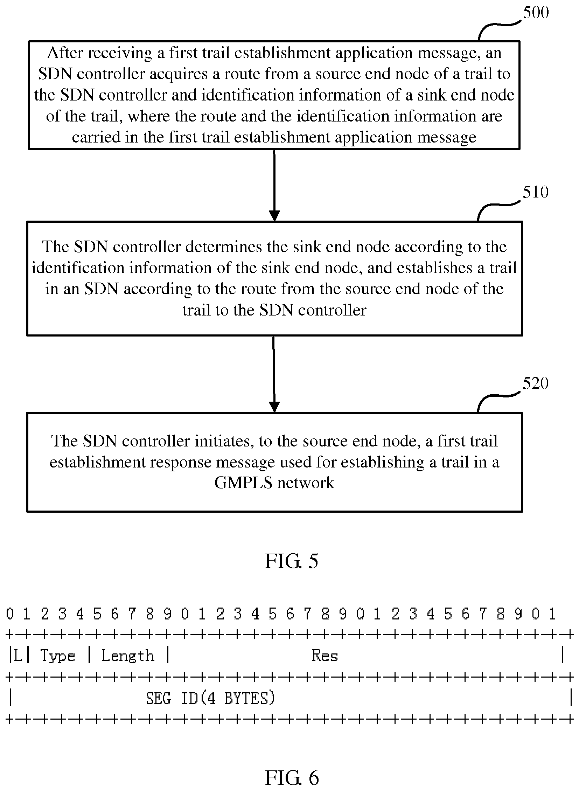

Referring to FIG. 5, in an embodiment of the present invention, when a source end node is located in a GMPLS network, and a sink end node is located in an SDN, a process of establishing a trail between nodes in the SDN and the GMPLS network is as follows:
Step 500: An SDN controller acquires, after receiving a first trail establishment application message, a route from a source end node of a trail to the SDN controller and identification information of a sink end node of the trail, where the route and the identification information are carried in the first trail establishment application message.

The SDN controller supports an SDN protocol and a GMPLS protocol.

After a source end node that needs to establish a trail determines that the identification information of the sink end node of the trail is sent to the source end node by the SDN controller, the source end node acquires the route from the source end node to the SDN controller, and sends the first trail establishment application message to the SDN controller. The first trail establishment application message carries the route from the source end node to the SDN controller and the identification information of the sink end node. The first trail establishment application message may further carry trail attribute information and the like. The trail attribute information may include: a service bandwidth parameter, a service routing constraint condition, an information transmission delay, and the like.

A boundary node in the SDN provides a GMPLS protocol transparent transmission function, which is used for transmitting information between the SDN controller and a node in the GMPLS network.

Further, if the SDN controller and the node in the GMPLS network are not in a direct connection relationship, after receiving a message (for example, a first trail establishment request message) sent by the source end node to the SDN controller, the boundary node (for example, a node E) in the SDN may add an SDN protocol message header (for example, add an OPENFLOW message header, where the message may be represented as OFPT_GMPLS_OVERLAY) to the message, and the boundary node sends, to the SDN controller, the first trail establishment request message added with the SDN protocol message header. Referring to FIG. 6, FIG. 6 is an object format bearing the identification information of the sink end node in the first trail establishment request message according to this embodiment of the present invention, where Res is a reserved field, ID is the identification information of the sink end node, and Type is a newly added identifier type (for example, TYPE=40, a value of type of a route in an existing IPV4 address is displayed as 1). Correspondingly, an SDN protocol message header (for example, an OPENFLOW message header is added, where the message may be represented as OFPT_GMPLS_OVERLAY) needs to be added to the message sent by the SDN controller to the source end node, so that the boundary node in the SDN that receives the message removes the SDN protocol message header, and forwards the message to the GMPLS network. If a GMPLS neighboring session has been established between the SDN controller and the node in the GMPLS network, the SDN protocol message header does not need to be added to both the message sent by the source end node to the SDN controller and the message sent by the SDN controller to the source end node, and a GMPLS message may be directly transferred by using the GMPLS neighboring session.

After receiving the first trail establishment application message, the SDN controller acquires the route (for example, G-F-SDN controller) from the source end node of the trail to the SDN controller and the identification information of the sink end node of the trail, where the route and the identification information are carried in the first trail establishment application message.

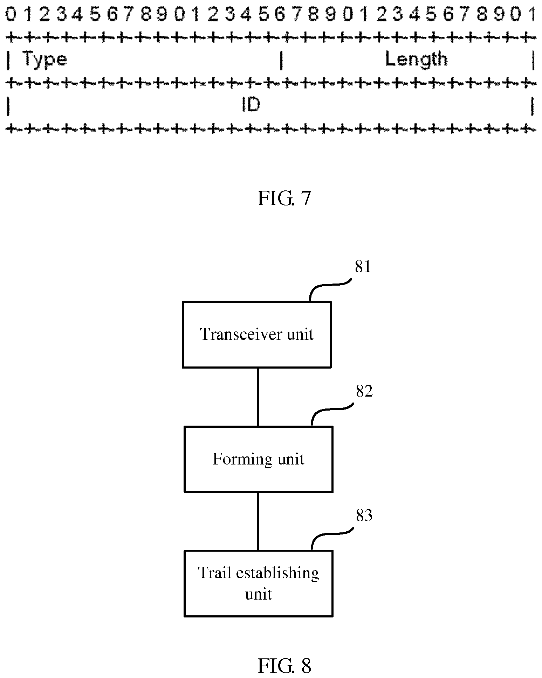

Optionally, before the source end node determines that the identification information of the sink end node of the trail is sent to the source end node by the SDN controller, the SDN controller may instruct each node in the SDN to report identification information of each node to the SDN controller; or before sending a trail inquiry message to the dual stack node, the SDN controller may acquire the identification information of each node in the SDN, where the identification information is locally stored and pre-configured. The SDN controller may send the acquired identification information of each node to each node located in the GMPLS network. The SDN controller may send, by using an OSPF (Open Shortest Path First, open shortest path first) protocol message, the identification information of each node in the SDN to each node located in the GMPLS network, to enable each node in the GMPLS network to store the identification information of each node in the SDN. For example, referring to FIG. 7, a message packet is added to the OSPF protocol message. The message packet is used for carrying the identification information of the each node in the SDN, and the identification information includes: an identification type (Type), an identification length (Lengh), and specific identification information (ID). Further, after receiving the OSPF protocol message sent by the SDN controller, each node in the GMPLS network acquires identification information of a node that sends the OSPF protocol message. For example, after receiving identification information of a node A that is carried in the OSPF protocol message, a source end node G located in the GMPLS network determines that the node sending the OSPF protocol message is the SDN controller.

Step 510: The SDN controller determines the sink end node according to the identification information of the sink end node, and establishes a trail in an SDN according to the route from the source end node of the trail to the SDN controller.

In this embodiment of the present invention, because the SDN controller supports both the SDN protocol and the GMPLS protocol, the SDN controller determines the sink end node according to the identification information of the sink end node, and the trail established in the SDN is a trail established from a boundary node in the SDN to the sink end node. For example, referring to FIG. 2, the SDN controller determines that the sink end node of the trail is A, and a route from the source end node G to the SDN controller is: G-F-SDN controller. According to the fact that a boundary node in the GMPLS on the route is F, a boundary node E in the SDN may be selected, and a trail that the SDN controller establishes in the SDN is a trail established from the boundary node E to the sink end node A.

Step 520: The SDN controller initiates, to the source end node, a first trail establishment reply message used for establishing a trail in a GMPLS network.

In this embodiment of the present invention, after the SDN controller determines that the trail from the boundary node of the SDN to the sink end node is established completely, the SDN controller initiates the first trail establishment reply message to the source end node. The first trail establishment reply message includes an SDN protocol message header. For example, when the route from the source end node to the sink end node is G-F-E-A, after determining that establishment of a trail from the source end node A to the node E is completed, the SDN controller generates the first trail establishment reply message and sends the first trail establishment reply message to the node E, and the node E forwards the first trail establishment reply message to the sink end node G.

After the source end node receives the first trail establishment reply message sent by the SDN controller, establishment of a trail from the source end node to the boundary node in the SDN is completed.

In another embodiment of the present invention, an SDN controller may include an SDN sub-controller and a dual stack node, and the dual stack node supports an SDN protocol and a GMPLS protocol.

After receiving a first trail establishment application message, the dual stack node acquires a route from a source end node of the trail to the dual stack node and identification information of a sink end node of the trail, where the route and the identification information are carried in the first trail establishment application message; and the dual stack node sends a second trail establishment application message to the sub-controller, where the second trail establishment application message carries the route from the source end node to the dual stack node and the identification information of the sink end node.

The SDN sub-controller determines the sink end node according to the identification information of the sink end node, and establishes a trail from the dual stack node to the sink end node according to a route from the source end node of the trail to the SDN controller. The SDN sub-controller sends, to the dual stack node, a second trail establishment reply message indicating that the SDN sub-controller has established the trail from the dual stack node to the sink end node.

After receiving the second trail establishment reply message, the dual stack node initiates a first trail establishment reply message used for establishing a trail from the source end node to the dual stack node.

In this embodiment of the present invention, the dual stack node may acquire identification information of each node, where the identification information is stored in the SDN sub-controller; or the dual stack node may acquire preset identification information of each node locally. The dual stack node may acquire identification information of each node in an SDN from the SDN sub-controller by using an OPENFLOW protocol message request. Correspondingly, after receiving the OPENFLOW protocol message for acquiring the identification information of the node, the SDN sub-controller adds the identification information of each node in the SDN to an OPENFLOW protocol feedback message, and sends the OPENFLOW protocol feedback message to the dual stack node. The identification information of the node is information (for example, an IP address) for identifying the node, or the identification information of the node is a trail (namely, a trail from the dual stack node to the sink end node).

Based on the foregoing technical solutions, referring to FIG. 8, the present invention provides a trail establishment apparatus, including: a sending and receiving unit 81, a forming unit 82, and a trail establishing unit 83.

The sending and receiving unit 81 is configured to send a trail inquiry message to a dual stack node in a first network, where the trail inquiry message carries identification information of a sink end node of a trail, the sink end node is located in a second network, a source end node of the trail is located in the first network, and the dual stack node supports a protocol of the second network and a protocol of the first network; and configured to receive a trail feedback message sent by the dual stack node, and send the trail feedback message to the forming unit 82.

The forming unit 82 is configured to receive the trail feedback message sent by the receiving unit 81, form a virtual topology by using a network topology of the first network and a route, which is carried in the trail feedback message, from the dual stack node to the sink end node corresponding to the identification information of the sink end node, and send the virtual topology to the trail establishing unit 83, where the trail feedback message is a message that the dual stack node sends to the apparatus after receiving the trail inquiry message and determining the route from the dual stack node to the sink end node.

The trail establishing unit 83 is configured to receive the virtual topology sent by the forming unit 82, acquire a route, from the source end node to the sink end node, of the trail according to the virtual topology, and establish a trail from the source end node to the sink end node.

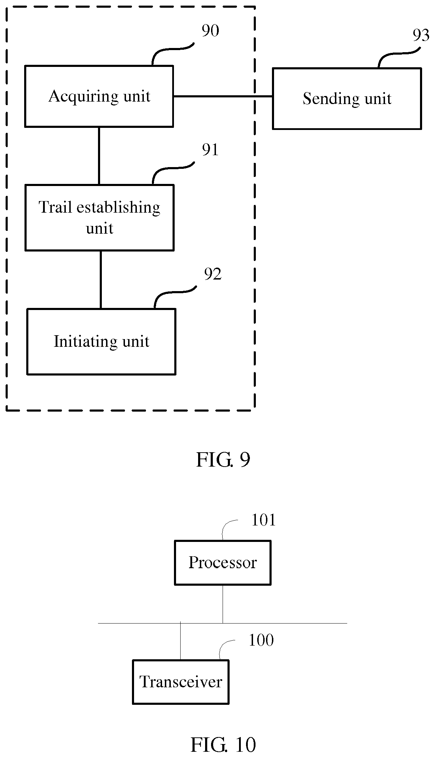

Based on the foregoing technical solutions, referring to FIG. 9, the present invention provides a trail establishment apparatus, including: an acquiring unit 90, a trail establishing unit 91, and an initiating unit 92.

The acquiring unit 90 is configured to acquire, after receiving a first trail establishment application message, a route from a source end node of a trail to the apparatus and identification information of a sink end node of the trail, where the route and the identification information are carried in the first trail establishment application message, and send the route from the source end node of the trail to the apparatus and the identification information of the sink end node of the trail to the trail establishing unit 91, where the source end node is located in a second network, the sink end node is located in a first network, the first trail establishment application message is initiated by the source end node, and the apparatus supports a protocol of the second network and a protocol of the first network.

The trail establishing unit 91 is configured to receive the route from the source end node of the trail to the apparatus and the identification information of the sink end node of the trail, where the route and the identification information are sent by the acquiring unit 90, determine the sink end node according to the identification information of the sink end node, and establish the trail in the first network according to the route from the source end node of the trail to the apparatus.

The initiating unit 92 is configured to initiate, to the source end node, a first trail establishment reply message used for establishing the trail in the second network.

Further, the apparatus includes a sub-controller and a dual stack node, where the dual stack node includes the acquiring unit 90 and the initiating unit 92, the sub-controller includes the trail establishing unit 91, the dual stack node supports the protocol of the first network and the protocol of the second network, and the apparatus specifically includes: the acquiring unit 90, configured to acquire, after receiving the first trail establishment application message, a route from the source end node to the dual stack node and the identification information of the sink end node, where the route and the identification information are carried in the first trail establishment application message, and send a second trail establishment application message to the sub-controller, where the second trail establishment application message carries the route from the source end node to the dual stack node and the identification information of the sink end node;
the trail establishing unit 91, configured to receive the second trail establishment application message sent by the dual stack node, determine the sink end node according to the identification information of the sink end node, and establish a trail from the dual stack node to the sink end node according to the route from the source end node to the dual stack node;
the trail establishing unit 91, further configured to send, to the dual stack node, a second trail establishment reply message indicating that the sub-controller has established the trail from the dual stack node to the sink end node; and
the initiating unit 92, configured to initiate, to the source end node, after receiving the second trail establishment reply message sent by the sub-controller, the first trail establishment reply message used for establishing a trail from the source end node to the dual stack node.

Further, the foregoing apparatus further includes a sending unit 93, configured to acquire identification information of a node in the first network before receiving the first trail establishment application message, and send the identification information to each node in the second network.

Based on the foregoing technical solutions, referring to FIG. 10, the present invention provides a controller, including: a transceiver 100 and a processor 101.

The transceiver 100 is configured to send a trail inquiry message to a dual stack node in a first network, where the trail inquiry message carries identification information of a sink end node of a trail, the sink end node is located in a second network, a source end node of the trail is located in the first network, and the dual stack node supports a protocol of the second network and a protocol of the first network.

The transceiver 100 is further configured to receive a trail feedback message sent by the dual stack node, and send the trail feedback message to the processor 101.

The processor 101 is configured to receive the trail feedback message sent by the transceiver 100, and form a virtual topology by using a network topology of the first network and a route, which is carried in the trail feedback message, from the dual stack node to the sink end node corresponding to the identification information of the sink end node, where the trail feedback message is a message that the dual stack node sends to the apparatus after receiving the trail inquiry message and determining the route from the dual stack node to the sink end node.

The processor 101 is further configured to acquire a route, from the source end node to the sink end node, of the trail according to the virtual topology, and establish a trail from the source end node to the sink end node.

Optionally, the processor 101 is specifically configured to acquire the route, from the source end node to the sink end node, of the trail according to the virtual topology; determine, according to the acquired route of the trail, a dual stack node that the trail passes through; establish a trail from the source end node to the dual stack node that the trail passes through; and send a trail establishment application message to the dual stack node that the trail passes through, so as to establish, to the sink end node, a trail from the dual stack node that the trail passes through, where the trail establishment application message carries a route, to the sink end node, from the dual stack node that the trail passes through.

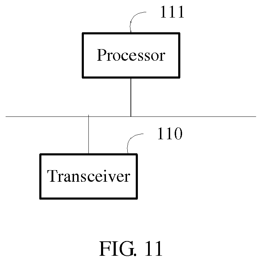

Based on the foregoing technical solutions, referring to FIG. 11, the present invention provides a controller, including: a transceiver 110 and a processor 111.

The transceiver 110 is configured to receive a first trail establishment application message, and send the first trail establishment application message to the processor 111.

The processor 111 is configured to receive the first trail establishment application message sent by the transceiver 110, and acquire a route from a source end node of a trail to the apparatus and identification information of a sink end node of the trail, where the route and the identification information are carried in the first trail establishment application message, the source end node is located in a second network, the sink end node is located in a first network, the first trail establishment application message is initiated by the source end node, and the apparatus supports a protocol of the second network and a protocol of the first network.

The processor 111 is further configured to determine the sink end node according to the identification information of the sink end node, and establish the trail in the first network according to the route from the source end node of the trail to the apparatus.

The processor 111 is further configured to initiate, to the source end node, a first trail establishment reply message used for establishing the trail in the second network.

Optionally, the processor 111 is further configured to receive the route from the source end node of the trail to the apparatus and the identification information of the sink end node of the trail, where the route and the identification information are sent by the acquiring unit, determine the sink end node according to the identification information of the sink end node, and establish a trail from a boundary node in the first network to the sink end node according to the route from the source end node of the trail to the apparatus.

Optionally, the processor 111 is further configured to initiate, to the source end node, the first trail establishment reply message used for establishing a trail from the source end node to the boundary node in the first network.

Further, the transceiver 110 is further configured to acquire identification information of a node in the first network before receiving the first trail establishment application message, and send the identification information to each node in the second network.

In conclusion, in the embodiments of the present invention, a controller sends a trail inquiry message to a dual stack node in a first network, where the trail inquiry message carries identification information of a sink end node of a trail; the controller receives a trail feedback message sent by the dual stack node, and forms a virtual topology by using a network topology of the first network and a route, which is carried in the trail feedback message, from the dual stack node to the sink end node corresponding to the identification information of the sink end node; and the controller acquires a route, from a source end node to the sink end node, of the trail according to the virtual topology, and establishes a trail from the source end node to the sink end node. By using the technical solutions of the present invention, a virtual topology is constructed according to a topology of an SDN network and a route, which is fed back by the dual stack node, from a dual stack node to a sink end node, thereby implementing establishment of a trail between a source end node and the sink end node, and further implementing establishment of a trail between nodes in different networks.

The present invention is described with reference to the flowcharts and/or block diagrams of the method, the device (system), and a computer program product according to the embodiments of the present invention. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of another programmable data processing device generate an apparatus for implementing a specific function in one or more processes in the flowcharts and/or in one or more blocks in the block diagrams.

These computer program instructions may also be stored in a computer readable memory that can instruct the computer or the another programmable data processing device to work in a specific manner, so that the instructions stored in the computer readable memory generate an artifact that includes an instruction apparatus. The instruction apparatus implements a specific function in one or more processes in the flowcharts and/or in one or more blocks in the block diagrams.

These computer program instructions may also be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Although some exemplary embodiments of the present invention have been described, persons skilled in the art can make changes and modifications to these embodiments once they learn the basic inventive concept. Therefore, the following claims are intended to be construed as to cover the exemplary embodiments and all changes and modifications falling within the scope of the present invention.

Obviously, persons skilled in the art can make various modifications and variations to the embodiments of the present invention without departing from the scope of the embodiments of the present invention.

## Claims

1. A trail establishment method, wherein the method comprises:
Sending (300), by a controller, a trail inquiry message to a dual stack node in a first network, wherein the trail inquiry message carries identification information of a sink end node of a trail, the sink end node is located in a second network, a source end node of the trail is located in the first network, and the dual stack node supports a protocol of the second network and a protocol of the first network;
Receiving (310), by the controller, a trail feedback message sent by the dual stack node, and forming a virtual topology by using a network topology of the first network and a route, which is carried in the trail feedback message, from the dual stack node to the sink end node corresponding to the identification information of the sink end node, wherein the trail feedback message is a message that the dual stack node sends to the controller after receiving the trail inquiry message and determining the route from the dual stack node to the sink end node; and
Acquiring (320), by the controller, a route, from the source end node to the sink end node, of the trail according to the virtual topology, and establishing a trail from the source end node to the sink end node.

2. The method according to claim 1, wherein the establishing, by the controller, a trail from the source end node to the sink end node specifically comprises:
determining, by the controller, according to the acquired route of the trail, a dual stack node that the trail passes through;
establishing, by the controller, a trail from the source end node to the dual stack node that the trail passes through; and
sending, by the controller, a trail establishment application message to the dual stack node that the trail passes through, so as to establish, to the sink end node, a trail from the dual stack node that the trail passes through, wherein the trail establishment application message carries a route, to the sink end node, from the dual stack node that the trail passes through.

3. The method according to claim 1 or 2, wherein the first network is a, software-defined network, SDN, the second network is a generalized multiprotocol label switching, GMPLS, network, and the controller is an SDN controller.

4. A trail establishment method, wherein the method comprises:
Acquiring (500), by a controller after receiving a first trail establishment application message, a route from a source end node of a trail to the controller and identification information of a sink end node of the trail, wherein the route and the identification information are carried in the first trail establishment application message, the source end node is located in a second network, the sink end node is located in a first network, the first trail establishment application message is initiated by the source end node, and the controller supports a protocol of the second network and a protocol of the first network;
Determining (510), by the controller, the sink end node according to the identification information of the sink end node, and establishing the trail in the first network according to the route from the source end node of the trail to the controller; and
Initiating (520), by the controller, to the source end node, a first trail establishment reply message used for establishing the trail in the second network.

5. The method according to claim 4, wherein the controller comprises a sub-controller and a dual stack node, the dual stack node supports the protocol of the first network and the protocol of the second network, and the method specifically comprises:
acquiring, by the dual stack node after receiving the first trail establishment application message, a route from the source end node to the dual stack node and the identification information of the sink end node, wherein the route and the identification information are carried in the first trail establishment application message;
sending, by the dual stack node, a second trail establishment application message to the sub-controller, wherein the second trail establishment application message carries the route from the source end node to the dual stack node and the identification information of the sink end node;
determining, by the sub-controller, the sink end node according to the identification information of the sink end node, and establishing a trail from the dual stack node to the sink end node according to the route from the source end node to the dual stack node;
sending, by the sub-controller, to the dual stack node, a second trail establishment reply message indicating that the sub-controller has established the trail from the dual stack node to the sink end node; and
initiating, by the dual stack node, to the source end node, after receiving the second trail establishment reply message, the first trail establishment reply message used for establishing a trail from the source end node to the dual stack node.

6. The method according to claim 4, wherein the establishing the trail in the first network specifically comprises:
establishing, by the controller, a trail from a boundary node in the first network to the sink end node; and
the initiating, by the controller, to the source end node, a first trail establishment reply message used for establishing the trail in the second network specifically comprises:
initiating, by the controller, to the source end node, the first trail establishment reply message used for establishing a trail from the source end node to the boundary node in the first network.

7. The method according to claim 4, 5, or 6, before the controller receives the first trail establishment application message, further comprising:
acquiring, by the controller, identification information of a node in the first network, and sending the identification information to each node in the second network.

8. The method according to any one of claims 4 to 7, wherein the first network is a software-defined network, SDN, the second network is a generalized multiprotocol label switching, GMPLS, network, and the controller is an SDN controller.

9. A trail establishment apparatus, wherein the apparatus comprises:
a sending and receiving unit (81), configured to send a trail inquiry message to a dual stack node in a first network, wherein the trail inquiry message carries identification information of a sink end node of a trail, the sink end node is located in a second network, a source end node of the trail is located in the first network, and the dual stack node supports a protocol of the second network and a protocol of the first network; and configured to receive a trail feedback message sent by the dual stack node, and send the trail feedback message to a forming unit (82);
the forming unit, configured to receive the trail feedback message sent by the receiving unit, form a virtual topology by using a network topology of the first network and a route, which is carried in the trail feedback message, from the dual stack node to the sink end node corresponding to the identification information of the sink end node, and send the virtual topology to a trail establishing unit (83), wherein the trail feedback message is a message that the dual stack node sends to the apparatus after receiving the trail inquiry message and determining the route from the dual stack node to the sink end node; and
the trail establishing unit, configured to receive the virtual topology sent by the forming unit, acquire a route, from the source end node to the sink end node, of the trail according to the virtual topology, and establish a trail from the source end node to the sink end node.

10. The apparatus according to claim 9, wherein the trail establishing unit is specifically configured to:
acquire the route, from the source end node to the sink end node, of the trail according to the virtual topology; determine, according to the acquired route of the trail, a dual stack node that the trail passes through; establish a trail from the source end node to the dual stack node that the trail passes through; and send a trail establishment application message to the dual stack node that the trail passes through, so as to establish, to the sink end node, a trail from the dual stack node that the trail passes through, wherein the trail establishment application message carries a route, to the sink end node, from the dual stack node that the trail passes through.

11. The apparatus according to claim 9 or 10, wherein the first network is a software-defined network, SDN, the second network is a generalized multiprotocol label switching, GMPLS, network, and the controller is an SDN controller.

12. A trail establishment apparatus, wherein the apparatus comprises:
an acquiring unit (90), configured to acquire, after receiving a first trail establishment application message, a route from a source end node of a trail to the apparatus and identification information of a sink end node of the trail, wherein the route and the identification information are carried in the first trail establishment application message, and send the route from the source end node of the trail to the apparatus and the identification information of the sink end node of the trail to a trail establishing unit (91), wherein the source end node is located in a second network, the sink end node is located in a first network, the first trail establishment application message is initiated by the source end node, and the apparatus supports a protocol of the second network and a protocol of the first network;
the trail establishing unit, configured to receive the route from the source end node of the trail to the apparatus and the identification information of the sink end node of the trail, wherein the route and the identification information are sent by the acquiring unit, determine the sink end node according to the identification information of the sink end node, and establish the trail in the first network according to the route from the source end node of the trail to the apparatus; and
an initiating unit (92), configured to initiate, to the source end node, a first trail establishment reply message used for establishing the trail in the second network.

13. The apparatus according to claim 12, wherein the apparatus comprises a sub-controller and a dual stack node, the dual stack node comprises the acquiring unit and the initiating unit, the sub-controller comprises the trail establishing unit, the dual stack node supports the protocol of the first network and the protocol of the second network, and the apparatus specifically comprises:
the acquiring unit, configured to acquire, after receiving the first trail establishment application message, a route from the source end node to the dual stack node and the identification information of the sink end node, wherein the route and the identification information are carried in the first trail establishment application message, and send a second trail establishment application message to the sub-controller, wherein the second trail establishment application message carries the route from the source end node to the dual stack node and the identification information of the sink end node;
the trail establishing unit, configured to receive the second trail establishment application message sent by the dual stack node, determine the sink end node according to the identification information of the sink end node, and establish a trail from the dual stack node to the sink end node according to the route from the source end node to the dual stack node;
the trail establishing unit, further configured to send, to the dual stack node, a second trail establishment reply message indicating that the sub-controller has established the trail from the dual stack node to the sink end node; and
the initiating unit, configured to initiate, to the source end node, after receiving the second trail establishment reply message sent by the sub-controller, the first trail establishment reply message used for establishing a trail from the source end node to the dual stack node.

14. The apparatus according to claim 12, wherein the trail establishing unit is specifically configured to receive the route from the source end node of the trail to the apparatus and the identification information of the sink end node of the trail, wherein the route and the identification information are sent by the acquiring unit, determine the sink end node according to the identification information of the sink end node, and establish a trail from a boundary node in the first network to the sink end node according to the route from the source end node of the trail to the apparatus; and
the initiating unit is specifically configured to initiate, to the source end node, the first trail establishment reply message used for establishing a trail from the source end node to the boundary node in the first network.

15. The apparatus according to any one of claims 12 to 14, wherein the apparatus further comprises a sending unit, configured to:
acquire identification information of a node in the first network before receiving the first trail establishment application message, and send the identification information to each node in the second network.

## Patentansprüche

1. Spurermittlungsverfahren, wobei das Verfahren Folgendes umfasst:
Senden (300), durch eine Steuervorrichtung, einer Spuranfragenachricht an einen Doppelstapelknoten in einem ersten Netzwerk, wobei die Spuranfragenachricht Identifikationsinformationen eines Senkenendknotens einer Spur enthält, wobei sich der Senkenendknoten in einem zweiten Netzwerk befindet, ein Quellendknoten der Spur sich in dem ersten Netzwerk befindet, und der Doppelstapelknoten ein Protokoll des zweiten Netzwerks und ein Protokoll des ersten Netzwerks unterstützt;
Empfangen (310), durch die Steuervorrichtung, einer vom Doppelstapelknoten gesendeten Spurrückmeldungsnachricht und Ausbilden einer virtuellen Topologie unter Verwendung einer Netzwerktopologie des ersten Netzwerks und einer Route, die in der Spurrückmeldungsnachricht von dem Doppelstapelknoten zu dem Senkenendknoten übertragen wird, die den Identifikationsinformationen des Senkenendknotens entspricht, wobei die Spurrückmeldungsnachricht eine Nachricht ist, die der Doppelstapelknoten an die Steuervorrichtung sendet, nachdem er die Spuranfragenachricht empfangen und die Route von dem Doppelstapelknoten zu dem Senkenendknoten bestimmt hat; und
Erfassen (320), durch die Steuervorrichtung, einer Route der Spur von dem Quellenendknoten zu dem Senkenendknoten nach der virtuellen Topologie und Ermitteln einer Spur von dem Quellenendknoten zu dem Senkenendknoten.

2. Verfahren nach Anspruch 1, wobei das Ermitteln einer Spur von dem Quellenendknoten zu dem Senkenendknoten durch die Steuervorrichtung insbesondere Folgendes umfasst:
Bestimmen, durch die Steuervorrichtung, eines Doppelstapelknotens, den die Spur durchläuft, nach der erfassten Route der Spur;
Ermitteln einer Spur von dem Quellenendknoten zu dem Doppelstapelknoten, durch den die Spur verläuft, durch die Steuervorrichtung; und
Senden, durch die Steuervorrichtung, einer Spurermittlungsanwendungsnachricht an den Doppelstapelknoten, den die Spur durchläuft, um eine Spur von dem Doppelstapelknoten, den die Spur durchläuft, zu dem Senkenendknoten zu ermitteln, wobei die Spurermittlungsanwendungsnachricht eine Route von dem Doppelstapelknoten, durch den die Spur verläuft, zu dem Senkenendknoten trägt.

3. Verfahren nach Anspruch 1 oder 2, wobei das erste Netzwerk ein softwaredefiniertes Netzwerk (SDN) ist, das zweite Netzwerk ist ein GMPLS(generalized multiprotocol label switching)-Netzwerk ist, und die Steuervorrichtung eine SDN-Steuervorrichtung ist.

4. Spurermittlungsverfahren, wobei das Verfahren Folgendes umfasst:
Erfassen (500), durch eine Steuervorrichtung, einer Route von einem Quellenendknoten einer Spur zu der Steuervorrichtung sowie von Identifikationsinformationen eines Senkenendknotens der Spur nach Empfang einer ersten Spurermittlungsanwendungsnachricht, wobei die Route und die Identifikationsinformationen in der ersten Spurermittlungsanwendungsnachricht getragen werden, wobei der Quellenendknoten sich in einem zweiten Netzwerk befindet, der Senkenendknoten sich in einem ersten Netzwerk befindet, die erste Spurermittlungsanwendungsnachricht vom Quellenendknoten initiiert wird, und die Steuervorrichtung ein Protokoll des zweiten Netzwerks und ein Protokoll des ersten Netzwerks unterstützt;
Bestimmen (510), durch die Steuervorrichtung, des Senkenendknotens nach den Identifikationsinformationen des Senkenendknotens und Ermitteln der Spur in dem ersten Netzwerk nach der Route von dem Quellenendknoten der Spur zu der Steuervorrichtung; und
Initiieren (520), durch die Steuervorrichtung, einer ersten Spurermittlungsantwortnachricht an dem Quellenendknoten, die zum Ermitteln der Spur in dem zweiten Netzwerk verwendet wird.

5. Verfahren nach Anspruch 4, wobei die Steuervorrichtung eine Untersteuervorrichtung und einen Doppelstapelknoten umfasst, wobei der Doppelstapelknoten das Protokoll des ersten Netzwerks und das Protokoll des zweiten Netzwerks unterstützt und das Verfahren insbesondere Folgendes umfasst:
Erfassen, durch den Doppelstapelknoten, einer Route von dem Quellenendknoten zu dem Doppelstapelknoten sowie der Identifikationsinformationen des Senkenendknotens nach Empfang der ersten Spurermittlungsanwendungsnachricht, wobei die Route und die Identifikationsinformationen in der ersten Spurermittlungsanwendungsnachricht getragen werden;
Senden, durch den Doppelstapelknoten, einer zweiten Spurermittlungsanwendungsnachricht an die Untersteuervorrichtung, wobei die zweite Spurermittlungsanwendungsnachricht die Route vom Quellenendknoten zum Doppelstapelknoten und die Identifikationsinformationen des Senkenendknotens trägt;
Bestimmen, durch die Untersteuervorrichtung, des Senkenendknotens nach den Identifikationsinformationen des Senkenendknotens und Ermitteln einer Spur vom Doppelstapelknoten zum Senkenendknoten nach der Route vom Quellenendknoten zum Doppelstapelknoten;
Senden, durch die Untersteuervorrichtung, einer zweiten Spurermittlungsantwortnachricht an den Doppelstapelknoten, die angibt, dass die Untersteuervorrichtung die Spur vom Doppelstapelknoten zum Senkenendknoten ermittelt hat; und
Initiieren, durch den Doppelstapelknoten, der ersten Spurermittlungsantwortnachricht an dem Quellendknoten, die zum Ermitteln einer Spur von dem Quellendknoten zu dem Doppelstapelknoten verwendet wird, nach Empfang der zweiten Spurermittlungsantwortnachricht.

6. Verfahren nach Anspruch 4, wobei das Ermitteln der Spur in dem ersten Netzwerk insbesondere Folgendes umfasst:
Ermitteln, durch die Steuervorrichtung, einer Spur von einem Grenzknoten in dem ersten Netzwerk zu dem Senkenendknoten; und
wobei das Initiieren, durch die Steuervorrichtung, einer ersten Spurermittlungsantwortnachricht an dem Quellenendknoten, die zum Ermitteln der Spur in dem zweiten Netzwerk verwendet wird, insbesondere Folgendes umfasst:
Initiieren, durch die Steuervorrichtung, der ersten Spurermittlungsantwortnachricht an dem Quellenendknoten, die zum Ermitteln einer Spur vom Quellenendknoten zum Grenzknoten im ersten Netzwerk verwendet wird.

7. Verfahren nach Anspruch 4, 5 oder 6, ferner Folgendes umfassend bevor die Steuervorrichtung die erste Spurermittlungsantwortnachricht empfängt:
Erfassen von Identifikationsinformationen eines Knotens im ersten Netzwerk durch die Steuervorrichtung und Senden der Identifikationsinformationen an jeden Knoten im zweiten Netzwerk.

8. Verfahren nach einem der Ansprüche 4 bis 7, wobei das erste Netzwerk ein softwaredefiniertes Netzwerk (SDN) ist, das zweite Netzwerk ist ein GMPLS(generalized multiprotocol label switching)-Netzwerk ist, und die Steuervorrichtung eine SDN-Steuervorrichtung ist.

9. Spurermittlungsvorrichtung, wobei die Vorrichtung Folgendes umfasst:
eine Sende- und Empfangseinheit (81), konfiguriert zum Senden einer Spuranfragenachricht an einen Doppelstapelknoten in einem ersten Netzwerk durch eine Steuervorrichtung, wobei die Spuranfragenachricht Identifikationsinformationen eines Senkenendknotens einer Spur enthält, wobei sich der Senkenendknoten in einem zweiten Netzwerk befindet, ein Quellendknoten der Spur sich in dem ersten Netzwerk befindet, und der Doppelstapelknoten ein Protokoll des zweiten Netzwerks und ein Protokoll des ersten Netzwerks unterstützt; und
konfiguriert zum Empfangen einer von dem Doppelstapelknoten gesendeten Spurrückmeldungsnachricht und zum Senden der Spurrückmeldungsnachricht an eine Ausbildungseinheit (82);
die Ausbildungseinheit, konfiguriert zum Empfangen einer von der Empfangseinheit gesendeten Spurrückmeldungsnachricht, zum Ausbilden einer virtuellen Topologie unter Verwendung einer Netzwerktopologie des ersten Netzwerks und einer Route, die in der Spurrückmeldungsnachricht von dem Doppelstapelknoten zu dem Senkenendknoten übertragen wird, die den Identifikationsinformationen des Senkenendknotens entspricht, und zum Senden der virtuellen Topologie an eine Spurermittlungseinheit (83), wobei die Spurrückmeldungsnachricht eine Nachricht ist, die der Doppelstapelknoten an die Vorrichtung sendet, nachdem er die Spuranfragenachricht empfangen und die Route von dem Doppelstapelknoten zu dem Senkenendknoten bestimmt hat; und
die Spurermittlungseinheit, konfiguriert zum Empfangen der durch die Ausbildungseinheit gesendeten virtuellen Topologie, zum Erfassen einer Route der Spur von dem Quellenendknoten zu dem Senkenendknoten nach der virtuellen Topologie und zum Ermitteln einer Spur von dem Quellenendknoten zu dem Senkenendknoten.

10. Vorrichtung nach Anspruch 9, wobei die Spurermittlungseinheit speziell konfiguriert ist zum:
Erfassen der Route der Spur von dem Quellenendknoten zu dem Senkenendknoten nach der virtuellen Topologie;
Bestimmen eines Doppelstapelknotens, den die Spur durchläuft, nach der erfassten Route der Spur;
Ermitteln einer Spur von dem Quellenendknoten zu dem Doppelstapelknoten, durch den die Spur verläuft; und
Senden einer SpurermittlUngsanwendungsnachricht an den Doppelstapelknoten, den die Spur durchläuft, um eine Spur von dem Doppelstapelknoten, den die Spur durchläuft, zu dem Senkenendknoten zu ermitteln, wobei die Spurermittlungsanwendungsnachricht eine Route von dem Doppelstapelknoten, durch den die Spur verläuft, zu dem Senkenendknoten trägt.

11. Vorrichtung nach Anspruch 9 oder 10, wobei das erste Netzwerk ein softwaredefiniertes Netzwerk (SDN) ist, das zweite Netzwerk ist ein GMPLS(generalized multiprotocol label switching)-Netzwerk ist, und die Steuervorrichtung eine SDN-Steuervorrichtung ist.

12. Spurermittlungsvorrichtung, wobei die Vorrichtung Folgendes umfasst:
eine Erfassungseinheit (90), konfiguriert zum Erfassen einer Route von einem Quellenendknoten einer Spur zu der Vorrichtung sowie von Identifikationsinformationen eines Senkenendknotens der Spur nach Empfang einer ersten Spurermittlungsanwendungsnachricht, wobei die Route und die Identifikationsinformationen in der ersten Spurermittlungsanwendungsnachricht getragen werden, und Senden der Route von dem Quellenendknoten zu der Vorrichtung sowie der Identifizierungsinformationen des Senkenendknotens der Spur an eine Spurermittlungseinheit (91), wobei der Quellenendknoten sich in einem zweiten Netzwerk befindet, der Senkenendknoten sich in einem ersten Netzwerk befindet, die erste Spurermittlungsanwendungsnachricht vom Quellenendknoten initiiert wird, und die Vorrichtung ein Protokoll des zweiten Netzwerks und ein Protokoll des ersten Netzwerks unterstützt;
die Spurermittlungseinheit, konfiguriert, die Route vom Quellenendknoten der Spur zur Vorrichtung und die Identifikationsinformationen des Senkenendknotens der Spur zu empfangen, wobei die Route und die Identifikationsinformationen von der Erfassungseinheit gesendet werden, den Senkenendknoten nach den Identifikationsinformationen des Senkenendknotens zu bestimmen und die Spur im ersten Netzwerk nach der Route von dem Quellenendknoten der Spur zu der Vorrichtung zu ermitteln; und
eine Initiierungseinheit (92), konfiguriert, um am Quellenendknoten eine erste Spurermittlungsantwortnachricht zu initiieren, die zum Ermitteln der Spur in dem zweiten Netzwerk verwendet wird.

13. Vorrichtung nach Anspruch 12, wobei die Vorrichtung eine Untersteuervorrichtung und einen Doppelstapelknoten umfasst, der Doppelstapelknoten die Erfassungseinheit und die Initiierungseinheit umfasst, die Untersteuervorrichtung die Spurermittlungseinheit umfasst, der Doppelstapelknoten das Protokoll des ersten Netzwerks und das Protokoll des zweiten Netzwerks unterstützt, und die Vorrichtung insbesondere Folgendes umfasst:
die Erfassungseinheit, konfiguriert zum Erfassen einer Route von dem Quellenendknoten zu dem Doppelstapelknoten sowie der Identifikationsinformationen des Senkenendknotens nach Empfang der ersten Spurermittlungsanwendungsnachricht, wobei die Route und die Identifikationsinformation in der ersten Spurermittlungsanwendungsnachricht getragen werden; und zum Senden einer zweiten Spurermittlungsanwendungsnachricht an die Untersteuervorrichtung, wobei die zweite Spurermittlungsanwendungsnachricht die Route vom Quellenendknoten zum Doppelstapelknoten und die Identifikationsinformationen des Senkenendknotens trägt;
die Spurermittlungseinheit, konfiguriert, die zweite Spurermittlungsanwendungsnachricht zu empfangen, die von dem Doppelstapelknoten gesendet wird, den Senkenendknoten nach den Identifikationsinformationen des Senkenendknotens zu bestimmen und eine Spur vom Doppelstapelknoten zum Senkenendknoten nach der Route vom Quellenendknoten zum Doppelstapelknoten zu ermitteln;
die Spurermittlungseinheit, ferner konfiguriert zum Senden einer zweiten Spurermittlungsantwortnachricht an den Doppelstapelknoten, die angibt, dass die Untersteuervorrichtung die Spur vom Doppelstapelknoten zum Senkenendknoten ermittelt hat; und
die Initiierungseinheit, konfiguriert zum Initiieren, durch den Doppelstapelknoten, der ersten Spurermittlungsantwortnachricht an dem Quellendknoten, die zum Ermitteln einer Spur von dem Quellendknoten zu dem Doppelstapelknoten verwendet wird, nach Empfang der von der Untersteuervorrichtung gesendeten zweiten Spurermittlungsantwortnachricht.

14. Vorrichtung nach Anspruch 12, wobei die Spurermittlungseinheit speziell konfiguriert ist, die Route vom Quellenendknoten der Spur zur Vorrichtung und die Identifikationsinformationen des Senkenendknotens der Spur zu empfangen, wobei die Route und die Identifikationsinformationen von der Erfassungseinheit gesendet werden, den Senkenendknoten nach den Identifikationsinformationen des Senkenendknotens zu bestimmen und eine Spur von einem Grenzknoten im ersten Netzwerk zum Senkenendknoten nach der Route von dem Quellenendknoten der Spur zu der Vorrichtung zu ermitteln; und
wobei die initiierende Einheit speziell konfiguriert ist, an dem Quellenendknoten die erste Spurermittlungsantwortnachricht zu initiieren, die zum Ermitteln einer Spur vom Quellenendknoten zum Grenzknoten im ersten Netzwerk verwendet wird.

15. Vorrichtung nach einem der Ansprüche 12 bis 14, wobei die Vorrichtung ferner eine Sendeeinheit umfasst, die konfiguriert ist zum:
Erfassen von Identifizierungsinformationen eines Knotens in dem ersten Netzwerk, bevor die erste Spurermittlungsanwendungsnachricht empfangen wird, und Senden der Identifizierungsinformationen an jeden Knoten in dem zweiten Netzwerk.

## Revendications

1. Procédé d'établissement de chemin, le procédé comprenant :
L'envoi (300), par un contrôleur, d'un message d'interrogation de chemin à un nœud à double pile dans un premier réseau, dans lequel le message d'interrogation de chemin transporte des informations d'identification d'un nœud d'extrémité collecteur d'un chemin, le nœud d'extrémité collecteur est situé dans un second réseau, un nœud d'extrémité source est situé dans le premier réseau, et le nœud à double pile supporte un protocole du second réseau et un protocole du premier réseau ;
La réception (310), par le contrôleur, d'un message de rétroaction de chemin envoyé par le nœud à double pile, et la formation d'une topologie virtuelle à l'aide d'une topologie de réseau du premier réseau et d'une route, qui est transportée par le message de rétroaction de chemin, allant du nœud à double pile au nœud d'extrémité collecteur correspondant aux informations d'identification du nœud d'extrémité collecteur, le message de rétroaction de chemin étant un message que le nœud à double pile envoie au contrôleur après réception du message d'interrogation de chemin et la détermination de la route allant du nœud à double pile au nœud d'extrémité collecteur ; et
L'acquisition (320), par le contrôleur, d'une route, allant du nœud d'extrémité source au nœud d'extrémité collecteur, du chemin, en fonction de la topologie virtuelle, et l'établissement un chemin allant du nœud d'extrémité source au nœud d'extrémité collecteur.

2. Procédé selon la revendication 1, dans lequel l'établissement, par le contrôleur, d'un chemin allant du nœud d'extrémité source au nœud d'extrémité collecteur comprend spécifiquement :
la détermination, par le contrôleur, en fonction de la route acquis du chemin, d'un nœud à double pile par lequel le chemin passe ;
l'établissement, par le contrôleur, d'un chemin allant du nœud d'extrémité source au nœud à double pile par lequel le chemin passe ; et
l'envoi, par le contrôleur, d'un message d'application d'établissement de chemin au nœud à double pile par lequel le chemin passe afin d'établir un chemin, allant du nœud à double pile par lequel le chemin passe au nœud d'extrémité collecteur, dans lequel le message d'application d'établissement de chemin transporte la route, allant du nœud à double pile par lequel le chemin passe au nœud d'extrémité collecteur.

3. Procédé selon la revendication 1 ou 2, dans lequel le premier réseau est un réseau défini par logiciel, SDN, le second réseau est un réseau de commutation multiprotocole par étiquette généralisé, GMPLS, et le contrôleur est un contrôleur SDN.

4. Procédé d'établissement de chemin, le procédé comprenant :
L'acquisition (500), par le contrôleur, après réception d'un premier message d'application d'établissement de chemin, d'une route allant d'un nœud d'extrémité source d'un chemin au contrôleur et des informations d'identification d'un nœud d'extrémité collecteur du chemin, dans lequel la route et les informations d'identification sont transportées dans le premier message d'application d'établissement de chemin, le nœud d'extrémité source est situé dans un second réseau, le nœud d'extrémité collecteur est situé dans un premier réseau, le premier message d'application d'établissement de chemin est initié par le nœud d'extrémité source, et le contrôleur supporte un protocole du second réseau et un protocole du premier réseau;
La détermination (510), par le contrôleur, du nœud d'extrémité collecteur en fonction des informations d'identification du nœud d'extrémité collecteur, et l'établissement du chemin dans le premier réseau en fonction de la route allant du nœud d'extrémité source du chemin au contrôleur ; et
L'initiation (520), par le contrôleur, au nœud d'extrémité source, d'un premier message de réponse d'établissement utilisé pour établir le chemin dans le second réseau.

5. Procédé selon la revendication 4, dans lequel le contrôleur comprend un sous-contrôleur et un nœud à double pile, le nœud à double pile supporte le protocole du premier réseau et le protocole du second réseau, et le procédé comprend spécifiquement :
l'acquisition, par le nœud à double pile après réception du premier message d'application d'établissement du chemin, de la route allant du nœud d'extrémité source au nœud à double pile et les informations d'identification du nœud d'extrémité collecteur, dans lequel la route et les informations d'identification sont transportées dans le premier message d'application d'établissement de chemin ;
l'envoi, par le nœud à double pile, d'un second message d'application d'établissement de chemin au sous-contrôleur, dans lequel le second message d'application d'établissement de chemin transporte la route allant du nœud d'extrémité source au nœud à double pile et les informations d'identification du nœud d'extrémité collecteur ;
la détermination, par le sous-contrôleur, du nœud d'extrémité collecteur en fonction des informations d'identification du nœud d'extrémité collecteur, et l'établissement d'un chemin allant du nœud à double pile au nœud d'extrémité collecteur en fonction de la route allant du nœud d'extrémité source au nœud à double pile ;
l'envoi, par le sous-contrôleur, au nœud à double pile, d'un second message de réponse d'établissement de chemin indiquant que le sous-dispositif a établi le chemin allant du nœud à double pile au nœud d'extrémité collecteur ; et
l'initiation, par le nœud à double pile, au nœud d'extrémité source, après réception du second message de réponse d'établissement de chemin, d'un premier message de réponse d'établissement de chemin utilisé pour établir un chemin allant du nœud d'extrémité source au nœud à double pile.

6. Procédé selon la revendication 4, dans lequel l'établissement du chemin dans le premier réseau comprend spécifiquement :
l'établissement, par le contrôleur, d'un chemin allant d'un nœud frontière dans le premier réseau au nœud d'extrémité collecteur ; et
l'initiation, par le contrôleur, au nœud d'extrémité source, d'un premier message de réponse d'établissement de chemin utilisé pour établir le chemin dans le second réseau comprend spécifiquement :
l'initiation, par le contrôleur, au nœud d'extrémité source, d'un premier message de réponse d'établissement de chemin utilisé pour établir un chemin allant du nœud d'extrémité source au nœud frontière dans le premier réseau.

7. Procédé selon la revendication 4, 5 ou 6, avant que le contrôleur reçoive le premier message d'application d'établissement de chemin, comprenant en outre :
l'acquisition, par le contrôleur, d'informations d'identification d'un nœud dans le premier réseau, et l'envoi des informations d'identification à chaque nœud dans le second réseau.

8. Procédé selon l'une quelconque des revendications 4 à 7, dans lequel le premier réseau est un réseau défini par logiciel, SDN, le second réseau est un réseau de commutation multiprotocole par étiquette généralisé, GMPLS, et le contrôleur est un contrôleur SDN.

9. Appareil d'établissement de chemin, l'appareil comprenant :
une unité d'envoi et de réception (81), configurée pour envoyer un message d'interrogation de chemin à un nœud à double pile dans un premier réseau, le message d'interrogation de chemin transportant des informations d'identification d'un nœud d'extrémité collecteur d'un chemin, le nœud d'extrémité collecteur d'un chemin étant situé dans un second réseau, le nœud d'extrémité source du chemin étant situé dans le premier réseau, et le nœud à double pile supportant un protocole du second réseau et un protocole du premier réseau ; et configurée pour recevoir un message de rétroaction de chemin envoyé par le nœud à double pile et envoyer le message de rétroaction de chemin à une unité de formation (82) ;
l'unité de formation, configurée pour recevoir le message de rétroaction de chemin envoyé par l'unité de réception, former une topologie virtuelle à l'aide d'une topologie de réseau du premier réseau et d'une route, qui est transportée dans le message de rétroaction de chemin, allant du nœud à double pile au nœud d'extrémité collecteur correspondant aux informations d'identification du nœud d'extrémité collecteur, et envoyer la topologie virtuelle à une unité d'établissement de chemin (83), le message de rétroaction de chemin étant un message que le nœud à double pile envoie à l'appareil après réception du message d'interrogation de chemin et la détermination de la route allant du nœud à double pile au nœud d'extrémité collecteur ; et
l'unité d'établissement de chemin, configurée pour recevoir la topologie virtuelle envoyé par l'unité de formation, acquérir une route, allant du nœud d'extrémité source au nœud d'extrémité collecteur, du chemin en fonction de la topologie virtuelle, et établir un chemin allant du nœud d'extrémité source au nœud d'extrémité collecteur.

10. Appareil selon la revendication 9, dans lequel l'unité d'établissement du chemin est spécifiquement configurée pour :
acquérir la route, allant du nœud d'extrémité source au nœud d'extrémité collecteur, du chemin en fonction de la topologie virtuelle ; déterminer, en fonction de la route acquise du chemin, un nœud à double pile par lequel le chemin passe ; établir un chemin allant du nœud d'extrémité source au nœud à double pile par lequel le chemin passe ; et envoyer un message d'application d'établissement de chemin au nœud à double pile par lequel le chemin passe, afin d'établir un chemin allant du nœud à double pile par lequel le chemin passe au nœud d'extrémité collecteur, dans lequel le message d'application d'établissement de chemin transporte une route allant du nœud à double pile par lequel le chemin passe, au nœud d'extrémité collecteur de chemin.

11. Appareil selon la revendication 9 ou 10, dans lequel le premier réseau est un réseau défini par logiciel, SDN, le second réseau est un réseau de commutation multiprotocole par étiquette généralisé, GMPLS, et le contrôleur est un contrôleur SDN.

12. Appareil d'établissement de chemin, l'appareil comprenant :
une unité d'acquisition (90), configurée pour acquérir, après réception d'un premier message d'application d'établissement, une route allant d'un nœud d'extrémité source d'un chemin à l'appareil et les informations d'identification d'un nœud d'extrémité collecteur du chemin, la route et les informations d'identification étant transportées dans le premier message d'application d'établissement du chemin, et envoyer la route depuis le nœud d'extrémité source du chemin à l'appareil et les informations d'identification du nœud d'extrémité collecteur du chemin à une unité d'établissement de chemin (91), le nœud d'extrémité source étant situé dans un second réseau, le nœud d'extrémité collecteur étant situé dans un premier réseau, le premier message d'application d'établissement de chemin étant initié par le nœud d'extrémité source, et l'appareil supportant un protocole du second réseau et un protocole du premier réseau ;
l'unité d'établissement de chemin, configurée pour recevoir la route allant du nœud d'extrémité source du chemin à l'appareil et les informations d'identification du nœud d'extrémité collecteur du chemin, la route et les informations d'identification étant envoyées par l'unité d'acquisition, déterminer le nœud d'extrémité collecteur en fonction des informations d'identification du nœud d'extrémité collecteur, et établir le chemin dans le premier réseau en fonction de la route allant du nœud d'extrémité source du chemin à l'appareil ; et
une unité d'initiation (92), configurée pour initier, au nœud d'extrémité source, un premier message de réponse d'établissement de chemin utilisé pour établir le chemin dans le second réseau.

13. Appareil selon la revendication 12, dans lequel l'appareil comprend un sous-contrôleur et un nœud à double pile, le nœud à double pile comprend l'unité d'acquisition et l'unité d'initiation, le sous-contrôleur comprend l'unité d'établissement de chemin, le nœud à double pile supporte le protocole du premier réseau et le protocole du second réseau, et l'appareil comprend spécifiquement :
l'unité d'acquisition, configurée pour acquérir, après réception du premier message d'application d'établissement du chemin, une route allant du nœud d'extrémité source au nœud à double pile et les informations d'identification du nœud d'extrémité collecteur, la route et les informations d'identification étant transportées dans le premier message d'application d'établissement du chemin, et envoyer un second message d'application d'établissement de chemin au sous-contrôleur, le second message d'application d'établissement de chemin transportant la route allant du nœud d'extrémité source au nœud à double pile et les informations d'identification du nœud d'extrémité collecteur ;
l'unité d'établissement de chemin, configurée pour recevoir le second message d'application d'établissement de chemin envoyé par le nœud à double pile, déterminer le nœud d'extrémité collecteur en fonction des informations d'identification du nœud d'extrémité collecteur, et établir un chemin allant du nœud à double pile au nœud d'extrémité collecteur en fonction de la route allant du nœud d'extrémité source au nœud à double pile ;
l'unité d'établissement de chemin, configurée en outre pour envoyer, au nœud à double pile, un second message de réponse d'établissement de chemin indiquant que le sous-contrôleur a établi le chemin allant du nœud à double pile au nœud d'extrémité collecteur ; et
l'unité d'initiation, configurée pour initier, au nœud d'extrémité source, après réception du second message de réponse d'établissement de chemin envoyé par le sous-contrôleur, le premier message de réponse d'établissement de chemin utilisé pour établir un chemin allant du nœud d'extrémité source au nœud à double pile.

14. Appareil selon la revendication 12, dans lequel l'unité d'établissement de chemin est configurée spécifiquement pour recevoir la route allant du nœud d'extrémité source du chemin à l'appareil et les informations d'identification du nœud d'extrémité collecteur du chemin, dans lequel la route et les informations d'identification sont envoyées par l'unité d'acquisition, déterminer le nœud d'extrémité collecteur en fonction des informations d'identification du nœud d'extrémité collecteur, et établir un chemin allant d'un nœud frontière dans le premier réseau au nœud d'extrémité collecteur en fonction de la route allant du nœud d'extrémité source du chemin à l'appareil ; et
l'unité d'initiation est spécifiquement configurée pour initier, au nœud d'extrémité source, le premier message de réponse d'établissement de chemin utilisé pour établir un chemin allant du nœud d'extrémité source au nœud frontière dans le premier réseau.

15. Appareil selon l'une quelconque des revendications 12 à 14, dans lequel l'appareil comprend une unité d'envoi, configurée pour :
acquérir les informations d'identification d'un nœud dans le premier réseau avant de recevoir le premier message d'application d'établissement de chemin, et envoyer les informations d'identification à chaque nœud dans le second réseau.
